# EUROPÄISCHE PATENTANMELDUNG

(11) **EP 4 283 016 A1**
(43) Veröffentlichungstag der Anmeldung: **29.11.2023**
(21) Anmeldenummer: 22174880.9
(22) Anmeldetag: 23.05.2022
(51) Int. Cl.: C25B 1/04, C25B 9/70, C25B 15/00, C25B 15/02, C25B 15/08, C02F 1/00, B63B 35/44, B63J 1/00, H02S 10/20, H02S 10/40, H02S 40/38

(54) **MODUL ZUR ERZEUGUNG VON WASSERSTOFF SOWIE ANLAGE MIT EINER MEHRZAHL DERARTIGER MODULE**

(71) Anmelder: Envhy Technologies GmbH, 82031 München (DE)
(72) Erfinder: Birkhofer, Markus, 92310 Sevres (FR); Sinitean, Renato, 75016 Paris (FR)
(74) Vertreter: Heinemeyer, Karsten

(57) **Zusammenfassung**

Beschreiben wird ein Modul (1) zur Erzeugung von Wasserstoff sowie eine Anlage (34) mit einer Mehrzahl derartiger Module (1). Das Modul (1) verfügt über eine schwimmfähige Tragstruktur (2), die in schwimmendem Zustand eine Auftriebskraft bereitstellt und an der jeweils wenigstens mittelbar zumindest ein Elektrolyseur, (3), eine Solarzelle (4), eine Wasserbereitstellungsanlage (5), zumindest ein Anlagenelement (6) zur Speicherung, Weiterleitung und/oder Verarbeitung von Wasserstoff und wenigstens ein Schnittstellenelement (7) befestigt sind. Über das Schnittstellenelement lässt sich eine Verbindung zum Transport von elektrischer Energie und/oder Wasserstoff mit einem weiteren Modul (1) zur Erzeugung von Wasserstoff und/oder einer schwimmfähigen Funktionseinheit (8) herstellen, wobei die Funktionseinheit (8) in Abhängigkeit des Bedarfs zur Erzeugung, Speicherung, Verdichtung, Verarbeitung, Verladung und/oder Weiterleitung von Wasserstoff eingerichtet ist., befestigt sind, wobei in wird.

## Beschreibung

Die Erfindung betrifft ein Modul zur Erzeugung von Wasserstoff sowie eine Anlage mit einer Mehrzahl derartiger Module. Das Modul verfügt zumindest über eine schwimmfähige Tragstruktur, an der wenigstens mittelbar zumindest ein Elektrolyseur, eine Solarzelle, eine Wasserbereitstellungsanlage, ein Anlagenelement zur Prozessierung von Wasserstoff und wenigstens ein Schnittstellenelement zur Weiterleitung von Wasserstoff und/oder elektrischer Energie an wenigstens ein weiteres solches Modul und/oder eine geeignete Funktionseinheit befestigt sind. Der Elektrolyseur dient der Erzeugung von Wasserstoff, wobei die Solarzelle zumindest mittelbar stromleitend mit dem Elektrolyseur verbunden ist und die für die Wasserstofferzeugung mittels Elektrolyse erforderliche Energie wenigstens teilweise bereitstellt. Mit Hilfe der Wasserbereitstellungsanlage wird der Elektrolyseur mit dem für die Erzeugung von Wasserstoff erforderlichen Prozesswasser versorgt und das Anlagenelement dient der Speicherung, Weiterleitung und/oder Verarbeitung von Wasserstoff. Von dem Modul lässt sich der erzeugte Wasserstoff über das Schnittstellenelement und eine geeignete Verbindung zu einem weiteren Modul und/oder zu einer Funktionseinheit, die nach Bedarf zur Erzeugung, Speicherung, Verdichtung, Verarbeitung, Verladung und/oder Weiterleitung von Wasserstoff eingerichtet ist, fördern.

Im Hinblick auf die geplante Umstellung der Energiewirtschaft weg von der Nutzung fossiler Energieträger hin zum Einsatz sogenannter erneuerbarer Energien kommt Wasserstoff zur Energiespeicherung und Energiewandlung eine besondere Bedeutung zu. Wasserstoff zeichnet sich in diesem Zusammenhang gerade dadurch aus, dass er sich, sofern Wasser vorhanden ist, dezentral und verhältnismäßig einfach unter Einsatz erneuerbarer Energien, wie insbesondere der Solar- und der Windenergie, erzeugen lässt und außerdem sowohl eine Speicherung als auch den Transport von Energie unter weitgehender Ausnutzung bestehender Infrastrukturtechnologien ermöglicht.

Im Übrigen erlaubt die Nutzung von Wasserstoff als Energieträger eine dezentrale Energieerzeugung, ohne dass begrenzt zugängliche Ressourcen, wie Öl, Gas oder Kohle erforderlich sind, sodass bei der Nutzung von Wasserstoff als Energieträger auch Vorteile hinsichtlich bestehender geopolitischer Zwänge zu erwarten sind.

Um eine nachhaltige Energie- und Wasserstoffwirtschaft etablieren zu können, kommt somit vor allem der Erzeugung des sogenannten grünen Wasserstoffs erhebliche Bedeutung zu. Als grüner Wasserstoff wird Wasserstoff bezeichnet, der durch Wasserspaltung im Wege der Elektrolyse gewonnen wird, wobei die für die Elektrolyse nötige elektrische Energie vollständig durch erneuerbare Energien erzeugt wird. Grüner Wasserstoff wird daher als umweltfreundliche, klimaneutrale Variante innerhalb einer zukünftigen Wasserstoffwirtschaft angesehen. Ein großer Vorteil besteht vor allem darin, dass sich durch die Erzeugung von Wasserstoff eine Sekundärenergie gewonnen wird, die eine zeitliche und örtliche Entkopplung zwischen Umwandlung und Verbrauch von Energie ermöglicht.

Neben der Erzeugung von Wasserstoff an Land, werden derzeit unterschiedliche Projekte umgesetzt, um Wasserstoff auch auf mithilfe von Wind- und Sonnenenergie auf dem Wasser, insbesondere dem Meer, zu erzeugen. Hierbei kommen teilweise schwimmende Fotovoltaikmodule zum Einsatz, mit denen die für die Wasserstofferzeugung benötigte elektrische Energie erzeugt wird. Ebenso werden Windparks, zum Teil in Verbindung mit nicht mehr benötigten Förder- oder Bohrplattformen genutzt, um die von Windkraftanlagen erzeugte elektrische Energie zur Wasserstoffgewinnung mit Hilfe eines auf einer derartigen Plattform angeordneten Elektrolyseurs zu nutzen.

In diesem Zusammenhang ist aus der DE 103 18 036 A1 eine Anlage zur Erzeugung von Wasserstoff durch Aufspaltung von Wasser in seine Komponenten bekannt, die über eine schwimmfähige Plattform verfügt, an der ein Fotovoltaikmodul und ein Elektrolyseur befestigt sind, wobei die vom Fotovoltaikmodul erzeugte elektrische Energie direkt zur Wasserstofferzeugung genutzt wird. Der erzeugte Wasserstoff wird von der Plattform oder jeweils von einer Mehrzahl von Plattformen zur weiteren Nutzung oder Zwischenspeicherung zu einer Zentralstation abgeleitet, über die der erzeugte Wasserstoff schließlich über ortsfeste Rohrleitungen weitergeleitet wird. Die beschriebenen Plattformen sind für eine Nutzung in flachen Gewässern ausgelegt, sodass eine einfache Abführung des erzeugten Wasserstoffs realisierbar ist und einzelne Plattformen von auf dem Gewässerboden stehenden Personen gewartet und bei Bedarf repariert werden können.

Ausgehend von dem mit großer Wahrscheinlichkeit in den nächsten Jahren weltweit stetig steigenden Bedarf an Wasserstoff, insbesondere an sogenanntem grünen Wasserstoff, und den zuvor beschriebenen technischen Lösungen, liegt der Erfindung die Aufgabe zu Grunde, eine technische Lösung anzugeben, mit der flexibel, bedarfsgerecht, insbesondere hinsichtlich der Produktionskapazität frei skalierbar, und mit großer Ausfallsicherheit sowohl an Land als auch auf einem Gewässer, insbesondere auch auf der offenen See, Wasserstoff durch Spaltung von Wasser in Wasserstoff und Sauerstoff gewonnen werden kann. Die Anlage soll sich vor allem durch ihre Robustheit, insbesondere Hochseetauglichkeit, die flexible Einsatzmöglichkeit und ihre Skalierbarkeit hinsichtlich der Wasserstofferzeugung auszeichnen. Vor allem sollte auf einfache Weise und dennoch zuverlässig die Erzeugung von Wasserstoff an unterschiedlichen Orten der Erde und insbesondere auch in sonnenreichen Seegebieten, die in der Nähe des Äquators liegen, möglich sein. Dennoch sollte es möglich sein, eine entsprechend robuste, flexibel einsetzbare und hinsichtlich seiner Produktionskapazität über einen großen Bereich skalierbare Lösung für die Wasserstoffproduktion anzugeben, die sich auch unter wirtschaftlichen Gesichtspunkten sinnvoll realisieren lässt. Eine derartige Wasserstoffproduktionsanlage sollte sich durch einen konstruktiv möglichst einfachen Aufbau verfügen und bevorzugt den Einsatz von Standardkomponenten ermöglichen. Weiterhin sollten Ausfallzeiten aufgrund von Wartung, Reparatur und Austausch weitgehend minimiert werden. Darüber hinaus sollte der Betrieb einer Wasserstoffproduktionsanlage weitgehend automatisiert und mit möglichst geringem Einsatz von Personal möglich sein.

Die zuvor beschriebene Aufgabe wird mit einem Modul zur Erzeugung von Wasserstoff gemäß Anspruch 1 sowie einer Anlage mit den in Anspruch 16 angegebenen Merkmalen gelöst. Vorteilhafte Ausführungsformen der Erfindung sind Gegenstand der abhängigen Ansprüche und werden in der folgenden Beschreibung unter teilweiser Bezugnahme auf Figuren näher erläutert.

Die Erfindung betrifft ein Modul zur Erzeugung von Wasserstoff, das über eine in Wasser schwimmfähige Tragstruktur verfügt, die bei Kontakt mit Wasser somit eine Auftriebskraft erzählt. An der Tragstruktur sind jeweils wenigstens mittelbar zumindest ein Elektrolyseur zur Erzeugung von Wasserstoff, eine Solarzelle zur Erzeugung elektrischer Energie, zumindest eine Wasserbereitstellungsanlage zur Versorgung des Elektrolyseurs mit für die Erzeugung von Wasserstoff erforderlichem Prozesswasser, zumindest ein Anlagenelement zur Speicherung, Weiterleitung und/oder Verarbeitung von Wasserstoff und wenigstens ein Schnittstellenelement, das zur Herstellung einer zumindest zum Transport von elektrischer Energie und/oder Wasserstoff geeigneten Verbindung mit einem weiteren derartigen Modul zur Erzeugung von Wasserstoff und/oder einer ebenfalls in Wasser schwimmfähigen Funktionseinheit zur Erzeugung, Speicherung, Verdichtung, Verarbeitung, Verladung und/oder Weiterleitung von Wasserstoff geeignet ist, befestigt. Erfindungsgemäß befindet sich die Solarzelle oder ein Fotovoltaikmodul mit wenigstens einer Solarzelle, zumindest die für die Absorption von Sonnenstrahlung vorgesehene Oberfläche in schwimmendem Zustand der Tragstruktur oberhalb der Wasseroberfläche und ist wenigstens mittelbar stromleitend mit dem Elektrolyseur, in dem Wasserstoff aufgrund einer Elektrolyse aus Prozesswasser herstellbar ist, verbunden. Vorzugsweise verfügt der Elektrolyseur über wenigstens eine Brennstoffzelle, in der aufgrund der Versorgung mit elektrischer Energie eine Elektrolyse initiierbar ist. Erfindungswesentlich ist, dass ein kompaktes Modul bereitgestellt wird, das sämtliche Komponenten, die zur Erzeugung der für die Wasserstoffgewinnung benötigten elektrischen Energie und zur Gewinnung des Wasserstoffs, aber auch für die weitere Prozessierung des Wasserstoffs auf dem Modul benötigt werden, aufweist. Das Modul verfügt somit über wenigstens eine Solarzelle, einen Elektrolyseur, eine Wasserbereitstellungsanlage zur Bereitstellung des vom Elektrolyseur benötigten Prozesswassers und zumindest ein Anlagenelement zur Behandlung des erzeugten Wasserstoffs. Es wird somit ein hochintegratives Modul geschaffen, das im Übrigen aufgrund des ebenfalls vorgesehenen Schnittstellenelements derart mit einem gleichartigen Modul und/oder wenigstens einer weiteren schwimmfähigen Funktionseinheit zur Erzeugung, Speicherung, Verdichtung, Verarbeitung, Verladung und/oder Weiterleitung von Wasserstoff verbindbar ist. Aufgrund der Nutzung eines oder einer Mehrzahl von erfindungsgemäßen Modulen wird es möglich, eine flexibel einsetzbare und skalierbare Einheit zur Erzeugung, Verarbeitung, Speicherung und/oder Verladung von Wasserstoff zu schaffen.

Der Einsatz eines derartigen Moduls oder einer Produktionsanlage, die aus einer Mehrzahl derartiger Module und/oder weiterer Funktionseinheiten zusammengesetzt wird, ermöglicht eine besonders kosteneffektive Erzeugung großer Mengen von Wasserstoff, da die Vorteile einer Serienproduktion, nämlich die Nutzung standardisierter, autonomer Module als Produktionseinheiten, die über geeignete Schnittstellenelemente koppelbar sind, genutzt werden können. Hierbei sind Kosteneinsparungen sowohl bei den einzelnen Komponenten eines erfindungsgemäßen Moduls als bei einem Modul oder dem Zusammenschluss mehrerer Module durch die direkte Integration von Energieerzeugung, Wasserbereitstellung und Elektrolyseur in einem kompakten Modul realisierbar. Durch eine bedarfsgerechte Auswahl und Verbindung einer Mehrzahl von Modulen und/oder weiterer Funktionseinheiten ist es möglich, effektiv und bedarfsgerecht eine Produktionsanlage mit der jeweils benötigten Produktionskapazität zu schaffen. Darüber hinaus wird bei Vorsehen einer Vielzahl von gleichartigen Modulen sichergestellt, dass auch bei Ausfall einzelner Komponenten die Gesamtanlage ohne große Nachteile weiterbetrieben werden kann. Insbesondere ist es möglich, einzelne Module auf einfache Weise zu warten, zu reparieren und/oder auszutauschen, ohne hierbei wesentlichen Einfluss auf die Gesamtanlage zu nehmen. Zeiträume, in denen die Gesamtanlage für Wartungen stillsteht, werden so vermieden oder zumindest weitgehend minimiert. Außerdem können Defekte, die eine Reparatur nicht zulassen, schnell und auf einfache Weise durch den Austausch einzelner Module behoben werden.

Eine robuste, seegängige Ausführung der erfindungsgemäßen Module, die für einen autonomen Betrieb geeignet sind, ermöglicht den Einsatz des erfindungsgemäß ausgeführten Moduls oder einer Mehrzahl derartiger, miteinander verbundener Module auf allen Meeres- oder Binnengewässerflächen. Darüber hinaus ist es generell möglich, die erfindungsgemäßen Module auch an Land zu nutzen, indem diese einfach auf ihrem Traggestell an dem hierfür vorgesehenen Ort abgestellt werden und in Abhängigkeit der erforderlichen Produktionskapazität verschaltet oder zusammengeschlossen werden.

Auf besondere Weise ist vorgesehen, dass die auf einem erfindungsgemäß ausgeführten Modul angeordnete Solarzelle mit einer maximalen Leistung von 2 bis 2,5 kWₚ elektrische Energie erzeugt. Es ist aber auch denkbar, Solarzellen bzw. ein Photovoltaikmodul mit größerer Leistung, bevorzugt bis etwa 5 kWₚ zu verwenden, insbesondere dann, wenn ein Speicher für die erzeugte elektrische Energie auf dem gleichen und/oder einem anderen Modul und/oder einer Funktionseinheit vorhanden ist.

Ferner ist der Elektrolyseur eines Moduls derart ausgelegt, dass an einem Tag etwa 200 bis 250 g Wasserstoff, was bei einem Druck von 1,013 · 10⁵ Pa und einer Temperatur von 293 K einem Wasserstoffvolumen von etwa 2,4 bis 3,0 m³ entspricht, erzeugt werden, wobei es generell denkbar ist, dass der Elektrolyseur gleitend mit variierenden Wasserstofferzeugungsleistung betreibbar ist. Ebenso ist es denkbar, dass der Elektrolyseur ausschließlich unmittelbar von der mit einer Solarzelle erzeugten elektrischen Energie versorgt wird oder aber die für die Erzeugung von Wasserstoff benötigte elektrische Energie aus einer Speichereinheit für elektrische Energie, die vorzugsweise eine Speicherkapazität von 1 bis 6 kWh hat, wie einen Akkumulator und/oder einen Kondensator, erhält. In Abhängigkeit der Gestaltung eines erfindungsgemäßen Moduls ist es denkbar, dass eine Wasserstofferzeugung nur während Sonnenscheinphasen oder auch zumindest zeitweise außerhalb dieser Phasen, also beispielsweise auch bei Nacht oder bewölktem Himmel, erfolgt.

Besonders vorteilhaft ist es, wenn die Grundfläche eines erfindungsgemäßen Moduls mit seinen Komponenten eine Grundfläche von 10 m² nicht übersteigt und die maximale Höhe nicht größer als 1 m ist, wobei die Tragstruktur und/oder ein Schwimm- oder Ballastkörper und/oder ein Kiel, insbesondere wenn dieser von den anderen Komponenten abnehmbar ist, hierbei vorzugsweise nicht mitgerechnet wird. Die Höhe des Moduls mit Tragstruktur, Schwimm- oder Ballastkörper und/oder Kiel überschreitet gemäß einer ganz besonderen Ausgestaltung der Erfindung einen Wert von 2,3 m nicht. Im Weiteren ist ein unter Umständen vorgesehener Kiel klappbar und/oder abnehmbar ausgeführt, um den Transport eines Moduls zu vereinfachen. Von besonderem Vorteil ist es darüber hinaus, wenn die Abmessungen eines erfindungsgemäßen Moduls derart gewählt sind, dass sich ein solches für den Transport und/oder die Lagerung in einem 20-Fuß-Standardcontainer, der über Abmessungen von 6,058 m (Länge), 2,438 m (Breite) und 2,591 m (Höhe) verfügt, anordnen lässt, unter Umständen gemeinsam mit abgenommenem Ballast- oder Schwimmkörper und/oder Kiel.

Eine besondere Weiterbildung der Erfindung sieht vor, dass die Tragstruktur wenigstens teilweise ein in Wasser schwimmfähiges Material und/oder wenigstens einen Ballasttank, der mit wenigstens einem Gas und/oder Luft füllbar oder gefüllt ist, aufweist. Insbesondere das Vorsehen eines derartigen Ballasttanks bietet die Möglichkeit, die durch die Tragstruktur bereitgestellte Auftriebskraft bedarfsgerecht an die Ausführung des Moduls, insbesondere an die verwendeten Komponenten anzupassen. Hierfür sind vorzugsweise geeignete Stellelemente, wie etwa Ventile, Verdichter und Mess-, Steuer- und/oder Regelelemente vorgesehen. Vorzugsweise ist somit bedarfsgerecht, insbesondere in Abhängigkeit der herrschenden Wind- und/oder Strömungsverhältnisse, der Wassertiefe und/oder des Seegangs bzw. der Wellenhöhe, einstellbar, wie tief die Tragstruktur in das Wasser eintaucht.

Im Weiteren ist es denkbar, dass an der Tragstruktur wenigstens ein Ballastkiel befestigt oder zumindest befestigbar ist, der zur Erhöhung der Kippstabilität des erfindungsgemäßen Moduls beiträgt und ein Umkippen bzw. Kentern eines Moduls wenigstens erschweren oder sogar verhindern soll. Denkbar ist, dass der wenigstens eine Kiel kippbar, schwenkbar und/oder verfahrbar an der Tragstruktur befestigt ist, sodass die Tiefe, mit der dieser ins Wasser eintaucht, nach Bedarf veränderbar ist. Alternativ oder in Ergänzung ist es denkbar, dass eine Stelleinrichtung vorgesehen ist, um ein Gewicht und/oder eine Gewichtsverteilung des Kiels, beispielsweise durch gezieltes Befüllen und/oder Abführen von Wasser, Luft oder einem Gas, zu verändern.

In einer speziellen Ausführungsform der Erfindung ist vorgesehen, dass das Anlagenelement wenigstens einen Wasserstofftank aufweist, der in schwimmendem Zustand der Tragstruktur eine Auftriebskraft bereitstellt, sowie ein Teil der Tragstruktur ist und/oder zumindest teilweise die Tragstruktur bildet. Gemäß dieser Ausführungsform ist somit vorgesehen, dass ein Wasserstoffspeicher bzw. Wasserstofftank integraler Bestandteil des Moduls ist und hierbei zumindest einen Teil der schwimmfähigen Tragstruktur bildet. Bei einem derart ausgebildeten Modul handelt es sich somit um eine besonders kompakte Einheit, die sowohl die Baueinheiten zur Erzeugung elektrischer Energie sowie des Wasserstoffs, zur Bereitstellung des benötigten Prozesswassers al auch zumindest einen Wasserstoffspeicher, der Teil der Tragstruktur ist, aufweist. Grundsätzlich kann es sich bei dem Wasserstoffspeicher sowohl um einen Druckgasspeicher als auch einen Speicher zur Speicherung von Wasserstoff auf einem vergleichsweise niedrigen Druckniveau handeln.

Wesentlich ist wiederum, dass die Erzeugung elektrischer Energie, die Gewinnung des Wasserstoffs gemeinsam mit der Wasserstoffspeicherung auf vergleichsweise kleinem Raum innerhalb des erfindungsgemäß ausgeführten Moduls stattfinden. Durch bedarfsgerechte Zusammenschaltung mehrerer derartiger Module und/oder deren Kombination mit weiteren Funktionseinheiten zur Erzeugung, Speicherung, Verdichtung, Verarbeitung, Verladung und/oder Weiterleitung von Wasserstoff lassen sich wiederum auf einfache Weise bedarfsgerecht robuste, flexibel einsetzbare und wirtschaftlich effektiv herzustellende und zu betreibende Wasserstoffproduktionseinheiten schaffen.

Im Weiteren ist es von Vorteil, wenn die Wasserbereitstellungsanlage derart ausgebildet ist, dass wenigstens zeitweise einem Gewässer, auf dem die Tragstruktur schwimmt, Wasser entnommen wird und das entnommene Wasser dem Elektrolyseur, sofern erforderlich in aufbereiteter, beispielsweise in entsalzener, abgekühlter und/oder gereinigter Form, als Prozesswasser zur Erzeugung von Wasserstoff zugeführt wird. In diesem Fall verfügt die Wasserbereitstellungsanlage über geeignete Mittel, um einem Gewässer, auf dem das Modul mit seiner Tragstruktur schwimmt, das zur Wasserstofferzeugung benötigte Wasser zu entnehmen und derart aufzubereiten, dass es im Elektrolyseur als Prozesswasser zur Wasserstofferzeugung nutzbar ist, wobei das Prozesswasser zumindest zum großen Teil durch Einsatz der von der wenigstes einen Solarzelle, insbesondere einem Fotovoltaikmodul mit einer Mehrzahl von Solarzellen, bereitgestellten elektrischen Energie in Wasser und Sauerstoff aufgespalten wird.

Die Wasserbereitstellungsanlage verfügt hierbei auf vorteilhafte Weise über die für die Bereitstellung von Prozesswasser benötigten Anlagenelemente, wie etwa Pumpen, Ventile, Filter, Wärmeübertrager und/oder Sensorelemente. Vorzugsweise ist jeweils wenigstens ein geeignetes Aggregat, Stellelement, Sensoreinheit und/oder Steuereinheit vorgesehen, um in Abhängigkeit des Bedarfs, etwa der Beschaffenheit des Elektrolyseurs und seiner Elektroden, zumindest eine Eigenschaft des aus dem umgebenden Gewässer gewonnen Wassers und/oder des Prozesswassers, einschließlich etwaiger Zwischenprodukte, zu verändern. Denkbar ist in diesem Zusammenhang, dass eine Leitfähigkeit, eine Temperatur und/oder ein Anteil von Biomolekülen im Wasser gemessen und bedarfsgerecht verändert wird.

Eine besondere Weiterbildung der Erfindung sieht ferner vor, dass die Wasserbereitstellungsanlage ausgebildet ist, um wenigstens zeitweise aus Umgebungsluft Wasser zu entnehmen und das entnommene Wasser dem Elektrolyseur als Prozesswasser zur Erzeugung von Wasserstoff zuzuführen. Die gemäß dieser Ausführungsform ausgebildete Wasserbereitstellungsanlage verfügt somit über geeignete Anlagenelemente, um der Umgebungsluft das in ihr enthaltene Wasser zu entnehmen und dem Elektrolyseur als Prozesswasser zuzuführen. Denkbar ist es, dass die Wasserbereitstellungsanlage über wenigstens ein Mittel verfügt, dass eingerichtet ist, die Umgebungsluft zumindest in speziellen Bereichen unter ihre Taupunkttemperatur abzusenken, sodass es zu einer gezielt herbeigeführten Kondensation von Wasser kommt. Vorzugsweise ist wenigstens ein Sensorelement vorgesehen, um die Temperatur, die absolute Luftfeuchte und/oder die relative Luftfeuchte der Luft in der Umgebung des erfindungsgemäß ausgeführten Moduls zu erfassen.

Auf vorteilhafte Weise ist die Wasserbereitstellungsanlage hierbei derart ausgebildet, dass Prozesswasser aus der Umgebungsluft gewonnen wird, beispielsweise durch Kondensation an Oberflächen, deren Oberflächentemperatur niedriger als die Taupunkttemperatur der umgebenden Luft ist und/oder durch Auffangen von Niederschlag, insbesondere von Regenwasser. Auch in diesem Fall verfügt die Wasserbereitstellungsanlage auf vorteilhafte Weise über sämtliche Anlagenelemente, die für die Gewinnung, Weiterleitung, Speicherung, Aufbereitung und/oder Überwachung wenigstens einer Eigenschaft der Umgebungsluft und/oder gewonnenen Wassers erforderlich sind. Unabhängig davon, ob die Wasserbereitstellungsanlage Prozesswasser aus Umgebungsluft, einschließlich der Gewinnung von Niederschlag, und/oder aus dem das schwimmfähige Modul umgebenden Gewässer gewinnt, verfügt diese vorzugsweise über wenigstens ein Filterelement, eine Einheit zur Wasserentsalzung, ein Dosier- oder Mischelement, eine Sensoreinheit zur Erfassung des Salzgehaltes des dem Gewässer entnommenen Wassers und/oder des Prozesswassers, einen Wassertank, einen Auslass zur Ableitung von Wasser und/oder Prozesswasser in das Gewässer, ein Heizelement, eine Kondensationsfläche, ein Kühlelement zum Kühlen einer Oberfläche und/ oder einen Wärmeübertrager zur Kondensation von Wasser aus Luft. In diesem Zusammenhang ist es somit ebenfalls denkbar, dass die Wasserbereitstellungsanlage zur Bereitstellung des Prozesswassers über wenigstens ein Element zum Auffangen von Niederschlägen, insbesondere von Regenwasser, verfügt, wobei es generell denkbar ist, dass Niederschläge mit Hilfe geeigneter Trichter oder Rinnen aufgefangen und, falls das Wasser nicht sofort zur Wasserstoffherstellung im Elektrolyseur benötigt wird, in einem Wassertank, der ebenfalls Teil des erfindungsgemäßen Moduls ist, zwischengespeichert wird. Besonders bevorzugt sind Flächen, die für die Kondensation von Wasser aus der Umgebungsluft oder zur Ableitung von Niederschlägen vorgesehen sind, gegenüber der Horizontalen geneigt. In einer besonders geeigneten Ausgestaltung wird zumindest ergänzend die Oberfläche der für die Erzeugung elektrischer Energie vorgesehenen Solarzellen bzw. des Fotovoltaikmoduls genutzt, um Niederschlag und/oder kondensierendes Wasser abzuleiten und der Bereitstellung von Prozesswasser zuzuführen. Zur Ableitung von Wasser, aber auch um möglichst effektiv aus einfallender Sonnenstrahlung elektrische Energie zu erzeugen, ist die Oberfläche zumindest der Solarzellen zumindest teilweise gegenüber der Horizontalen geneigt, wobei es denkbar ist, dass eine oder mehrere Bereiche der Oberfläche in die gleiche Richtung oder unterschiedliche Richtungen geneigt sind. So ist es etwa denkbar, dass die Oberflächen der Solarzellen V-förmig oder pyramidenförmig angeordnet sind. Alternativ oder in Ergänzung ist es denkbar, dass zumindest die Oberflächen der Solarzellen gezielt, insbesondere in Abhängigkeit des Sonnenstandes und des Azimutwinkels der Sonne hinsichtlich ihrer Ausrichtung verstellbar sind. Besonders bevorzugt ist zumindest eine oder sind alle Oberflächen der Solarzellen derart angeordnet, dass eine Projektion eines Normalenvektors der jeweiligen Oberfläche in eine horizontale Ebene zumindest nahezu in Richtung Osten oder Westen zeigt.

Gemäß einer speziellen Weiterbildung der Erfindung verfügt die Wasserbereitstellungsanlage über ein Kühlelement zur Realisierung einer Strahlungskühlung und/oder einen Sorptionsentfeuchter, insbesondere einen Sorptionsentfeuchter mit einem während eines Betriebs bewegbaren Sorptionsmedium, das abwechselnd Feuchtigkeit aus der Umgebungsluft aufnimmt und diese wiederum, bspw. an einen das Sorptionsmedium wenigstens zeitweise durchströmenden Luftstrom, abgibt. Ferner ist in einer ganz besonders geeigneten Ausführungsform vorgesehen, dass mithilfe eines Strahlungskühlers die Oberfläche zumindest eines wenigstens zeitweise mit Umgebungsluft in Kontakt stehenden Elements, derart abgekühlt wird, dass sich an dieser Oberfläche aufgrund der Kondensation der Umgebungsluft Wasser bildet, die schließlich aufgefangen wird. Vorzugsweise ist die Oberfläche gegenüber der Horizontalen geneigt und/oder trichterförmig ausgebildet, um ein Abströmen des auskondensierten Wassers von der Oberfläche in ein Auffangelement zu begünstigen. Auf besonders vorteilhafte Weise emittiert der Strahlungskühler Infrarotstrahlung, sodass die Temperatur der Oberfläche unter die Taupunkttemperatur der Umgebungsluft abgesenkt wird. Im Weiteren ist es von Vorteil, wenn der Strahlungskühler in Abhängigkeit der mit wenigstens einer Sensoreinheit erfassten Temperatur und/oder relativen Luftfeuchte der Umgebungsluft angesteuert wird. In Abhängigkeit der relativen Luftfeuchte der Umgebungsluft kann so eine Temperaturabsenkung an der Oberfläche, die zur Erzeugung des Prozesswassers verwendet wird, bedarfsgerecht erfolgen und Wasser aus der Umgebungsluft abgeschieden werden.

Ebenso ist es denkbar, regenerativ arbeitende Sorptionsmedien, die wechselweise insbesondere aufgrund einer Drehung, Wasser aus einem Umgebungsluftstrom aufnehmen und daraufhin an einen anderen Fluidstrom der Wasserbereitstellungsanlage abgeben, verwendet werden.

In einer besonders geeigneten Ausführungsform der Erfindung ist vorgesehen, dass der Elektrolyseur, in dem das bereitgestellte Prozesswasser durch Elektrolyse in Wasserstoff und Sauerstoff aufgespalten wird, als Brennstoffzelle, insbesondere als Protonenaustauschmembran-Brennstoffzelle (PEMFC), als Alkalische Brennstoffzelle (AFC), als Festoxid-Brennstoffzelle (SOFC) oder als Salzwasser Brennstoffzelle, ausgeführt ist, wobei die Zelle jeweils im reversen Modus und damit als Elektrolyseurzelle betrieben wird. Gemäß einer speziellen Weiterbildung ist vorgesehen, dass ein Festoxid-Elektrolyseur mit integrierter Ammoniumproduktion zur Speicherung des erzeugten Wasserstoffs zum Einsatz kommt, sodass hinsichtlich der für die Erzeugung und Speicherung von Wasserstoff eine besonders kompakte Einheit genutzt wird.

Im Weiteren sieht eine spezielle Weiterbildung der Erfindung vor, dass die wenigstens eine Solarzelle stromleitend mit einem Akkumulator und/oder einem Kondensator verbunden ist. Es ist wiederum von Vorteil, wenn derartige Energiespeicher in Form eines Akkumulators und/oder Kondensators integraler Bestandteil des erfindungsgemäß ausgeführten Moduls sind und somit mittelbar oder unmittelbar mit der schwimmfähigen Tragstruktur des Moduls verbunden sind. Ein derartiger Energiespeicher wird auf vorteilhafte Weise zur Zwischenspeicherung der von der Solarzelle erzeugten elektrischen Energie verwendet. Insbesondere in Betriebsphasen, in denen keine Wasserstofferzeugung erfolgt, etwa weil der Elektrolyseur defekt oder reparatur- oder wartungsbedingt außer Betrieb ist oder gerade kein Bedarf für eine Wasserstofferzeugung besteht, kann so die von der Solarzelle erzeugte elektrische Energie zwischengespeichert und später, etwa in Nachtstunden oder bei Bewölkung genutzt werden, um den Elektrolyseur und/oder andere Verbraucher mit elektrischer Energie zu versorgen. Im Übrigen ist es von Vorteil, die wenigstens eine Solarzelle bzw. ein Fotovoltaikmodul hinsichtlich seiner Leistung derart zu dimensionieren, dass die Solarzelle pro Zeiteinheit mehr elektrische Energie erzeugt als von dem Elektrolyseur und den übrigen Verbrauchern während des Betriebs benötigt wird. Auf diese Weise kann beispielsweise die am Tag erzeugte überschüssige elektrische gespeichert und in der Nacht und/oder bei bewölktem Himmel zur weiteren zur Fortführung der Wasserstofferzeugung verwendet werden.

Eine weitere spezielle Ausgestaltung der Erfindung sieht vor, dass die Tragstruktur des erfindungsgemäß ausgeführten Moduls wenigstens mittelbar mit einer Antriebseinheit und einem davon antreibbaren Antriebsmittel zur Fortbewegung in schwimmendem Zustand verbunden ist. Bevorzugt handelt sich bei einer derartigen Antriebseinheit um einen Elektromotor, der mit einem Propeller oder einer Düseneinheit als Antriebsmittel verbunden ist, so dass das Modul bedarfsgerecht bewegbar ist. Denkbar ist in diesem Zusammenhang, dass die Antriebseinheit und/oder das Antriebsmittel über einen, bevorzugt wie zuvor beschriebenen Kiel, mit der Tragstruktur verbunden ist.

Auf vorteilhafte Weise ist ferner eine Steuereinheit vorgesehen, die eingerichtet ist, um Daten in Bezug auf die Modulposition, Informationen über einen Sonnenstand und/oder eine Sonnenscheindauer, Wetterparameter, Strömungsparameter, Gezeiteninformationen und/oder Wellenparameter zu verarbeiten oder entsprechende, auf den bereits verarbeiteten Daten beruhende Informationen zu erhalten und auf der Grundlage der verarbeiteten Daten und/oder den Informationen ein Steuersignal zur Ansteuerung der Antriebseinheit und damit zur gezielten Modulbewegung zu erzeugen. In diesem Zusammenhang ist es denkbar, dass eine derartige Ansteuerung der Antriebseinheit automatisiert erfolgt, sodass ein erfindungsgemäß ausgeführtes Modul bedarfsgerecht bewegt und/oder an unterschiedliche Orte verbracht werden kann. Denkbar ist in diesem Zusammenhang, dass die Bewegung eines erfindungsgemäß ausgeführten Moduls in Abhängigkeit von bevorstehenden Wetterereignissen, insbesondere besonders hohen Windstärken, starkem Wellengang und/oder Gezeiten erfolgt. Ebenso ist es denkbar, dass mithilfe einer derart ausgebildeten Kombination aus Steuer- und Antriebseinheit ein Modul zumindest teilautomatisiert derart bewegbar ist, dass dieses auf vergleichsweise einfache Weise, bevorzugt wiederum automatisch, mit wenigstens einem weiteren Modul und/oder einer Funktionseinheit zur Erzeugung, Speicherung, Verdichtung, Verarbeitung, Verladung und/oder Weiterleitung von Wasserstoff und/oder Befestigung von Schiffen verbindbar ist.

Gemäß einer weiteren besonderen Ausführungsform der Erfindung ist es denkbar, dass die Tragstruktur wenigstens mittelbar mit einer Befestigungseinheit verbunden ist, an der ein Treibanker und/oder eine Grundverankerung befestigbar ist. Das Vorsehen einer entsprechend geeignet ausgebildeten Befestigungseinheit an dem Modul stellt somit sicher, dass das Modul zumindest für einen gewissen Zeitraum bedarfsgerecht an der gewünschten Position verankert oder zumindest bezüglich seines Bewegungsradius oder Bewegungsgeschwindigkeit beschränkt werden kann. Durch spezielle Auswahl eines geeigneten Treibankers kann etwa eine Bewegung des Moduls in Abhängigkeit der herrschenden Bedingungen in Bezug auf Wind, Wellengang und Strömung auf ein gewünschtes Maß beschränkt werden.

Im Übrigen ist es von Vorteil, wenn wenigstens eine Sensoreinheit in oder an dem erfindungsgemäß ausgebildeten Modul vorgesehen ist, das zur Bestimmung der Wasserstoffkonzentration in einem Gasstrom geeignet ist. Gemäß dieser Ausführungsform ist es denkbar, dass die Wasserstoffkonzentration in einem Gasstrom überwacht und der Betrieb des Elektrolyseurs auf vorteilhafte Weise in Abhängigkeit der gemessenen Wasserstoffkonzentration geregelt werden kann. Ferner ist es denkbar, dass das erfindungsgemäße Modul über wenigstens eine weitere Sensoreinheit, etwa zur Erfassung von Wasser- und/oder Luftparametern verfügt. Mittels einer derartigen Sensoreinheit kann etwa der Salzgehalt des zur Erzeugung von Prozesswasser benötigten Wassers und/oder des Prozesswassers erfasst werden. Außerdem ist es denkbar, basierend auf dem gemessenen Salzgehalt, die Salzkonzentration, beispielsweise durch gezieltes Zudosieren oder Einmischen von Regenwasser und/oder aus der Umgebungsluft gewonnenem Süßwasser in Salzwasser, das dem umgebenden Gewässer entnommen wurde, auf einen gewünschten Wert, insbesondere in Abhängigkeit der im Elektrolyseur verwendeten Elektroden, einzustellen.

Ebenso kann eine Sensoreinheit vorgesehen sein, um die Temperatur und/oder die relative oder absolute Feuchte der Umgebungsluft zu erfassen, sodass etwa ein Strahlungskühler, der zur Gewinnung von Wasser aus der Umgebungsluft eingesetzt wird, insbesondere seine Kühlleistung, bedarfsgerecht gesteuert werden kann.

Im Weiteren ist gemäß einer speziellen Ausgestaltung der Erfindung vorgesehen, dass die Tragstruktur mit einer Einheit zur Erzeugung von elektrischer Energie aus Wind-, Wellen- und oder Strömungsenergie, insbesondere aus Gezeitenströmungsenergie, verbunden ist, die bevorzugt stromleitend mit wenigstens einem Verbraucher elektrischer Energie, einem Akkumulator und/oder dem Elektrolyseur eines erfindungsgemäß ausgeführten Moduls verbunden ist. Auf diese Weise ist es möglich, zusätzlich zur Nutzung von Solarenergie zumindest zeitweise auch andere Energiequellen zu nutzen, um die von den auf einem erfindungsgemäßen Modul angeordneten Verbrauchern benötigte elektrische Energie zu erzeugen.

Gemäß einer besonders geeigneten Ausgestaltung der Erfindung ist wenigstens eine Steuereinheit zur Steuerung des Betriebs vorgesehen, insbesondere um eine Leistung der Wasserbereitstellungsanlage bei der Bereitstellung von Prozesswasser, eine Leistung der Solarzelle bei der Erzeugung elektrischer Energie und/oder eine Leistung des Elektrolyseurs bei der Erzeugung von Wasserstoff in Abhängigkeit wenigstens eines Betriebsparameters, der spezifisch für die Erzeugung und Speicherung der elektrischen Energie und/oder des Wasserstoffs ist, bedarfsgerecht einzustellen oder zu verändern. Die Steuereinheit ist somit derart ausgeführt, dass in Abhängigkeit wenigstens eines Eingangsparameters, insbesondere einer Messgröße, eine Betriebsleistung der Solarzelle, des Elektrolyseurs und/oder der Wasserbereitstellungsanlage gezielt verändert wird. Besonders vorteilhaft kann auf diese Weise eine Regelung der zuvor genannten Einrichtungen realisiert werden. In diesem Zusammenhang ist es etwa denkbar, dass die Leistung der Solarzelle, beispielsweise durch eine zeitweise gezielt herbeigeführte Abschattung oder das Zuschalten elektrischer Widerstände, oder die des Elektrolyseurs bei der Erzeugung von Wasserstoff an die noch vorhandene Speicherkapazität für Wasserstoff anpassbar ist.

Weiterhin ist es auf vorteilhafte Weise denkbar, dass das Schnittstellenelement wenigstens eine Dämpfungs-, eine Feder- und/oder eine Energieumwandlungseinheit aufweist. Mit einem derart ausgebildeten Schnittstellenelement ist es möglich, Kräfte die während des Bestehens einer Verbindung zwischen einem Moduls und einem weiteren Modul und/oder zwischen einem Modul und einer Funktionseinheit an dem Schnittstellenelement auftreten, insbesondere Zug- oder Druckkräfte, zuverlässig aufgenommen oder sogar zur Energieumwandlung genutzt werden, insbesondere um aus den auftretenden Kräften elektrische Energie zu erzeugen, die dann wiederum unmittelbar durch wenigstens einen Verbraucher elektrischer Energie des Moduls genutzt oder aber zumindest zeitweise in einem Speicher für elektrische Energie, wie etwa einem Akkumulator oder einem Kondensator, zwischengespeichert wird. Alternativ oder in Ergänzung ist es denkbar, dass zumindest eine derartige Dämpfungs-, Feder- und/oder Energieumwandlungseinheit in der zwischen zwei Modulen oder zwischen einem Modul und einer Funktionseinheit verlaufenden Verbindung angeordnet sind.

Eine weitere spezielle Ausgestaltung der Erfindung sieht vor, dass ein erfindungsgemäß ausgeführtes Modul zusätzlich zu der wenigstens einen Solarzelle über wenigstens eine Einheit verfügt, die unter Ausnutzung von Kräften, die durch Wind, Wellen und/oder Strömung, insbesondere Gezeitenströmung, verursacht werden, elektrische Energie erzeugen. Vorzugsweise ist eine solche Einheit derart in den Prozess zur Erzeugung von Wasserstoff integriert, dass die erzeugte elektrische Energie in einem Speicher für elektrische Energie zwischengespeichert wird und den auf einem Modul vorgesehenen elektrischen Verbrauchern zur Verfügung steht. Derart zusätzliche Energieumwandlungseinheiten ermöglichen somit auch die Erzeugung von elektrischer Energie, wenn dies durch die Solarzelle, etwa bei Nacht oder bewölktem Himmel, nicht möglich ist.

Im Weiteren ist es von besonderem Vorteil, wenn im Bereich des Schnittstellenelements wenigstens eine Verstelleinheit vorgesehen ist, mit der eine Länge der Verbindung zwischen miteinander verbundenen Modulen oder zwischen einem Modul und einer damit verbundenen Funktionseinheit, also der jeweilige Abstand, veränderbar ist. Eine Veränderung des Abstandes erfolgt etwa in Abhängigkeit einer Veränderung der Wellenhöhe oder der im Gewässer herrschenden Strömungsgeschwindigkeit. Auch ist es denkbar, dass die Wartung, Reparatur und/oder der Austausche einzelner Module oder das Verbinden und Trennen von Modulen durch eine bedarfsgerechte Veränderung des Abstandes zwischen Modulen begünstigt wird.

Neben einem Modul betrifft die Erfindung auch ein Anlage mit wenigstens zwei Modulen, die gemäß wenigstens einer der zuvor beschriebenen Ausführungsformen ausgebildet sind oder mit wenigstens einem Modul gemäß zumindest einer der zuvor beschriebenen Ausführungsformen und einer Funktionseinheit zur Erzeugung Speicherung, Verdichtung, Verarbeitung, Verladung und/oder Weiterleitung von Wasserstoff, wobei die Verbindung zwischen den wenigstens zwei Modulen und/oder zwischen einem Modul und der Funktionseinheit mittels einer zum Transport von elektrischer Energie und/oder Wasserstoff geeigneten Verbindung hergestellt ist. Auf vorteilhafte Weise verfügt die Verbindung somit über einen Konnektor, der eine gezielt herstellbare und trennbare Verbindung zwischen wenigstens zwei Modulen oder zwischen einem Modul und einer Funktionseinheit herstellt, wobei ein derartiger Konnektor an seinen Enden derart ausgebildet ist, dass er zerstörungsfrei lösbar fest an einem Schnittstellenelement des Moduls oder der Funktionseinheit befestigbar ist. Die erfindungsgemäß ausgebildete Anlage kann hierbei derart aufgebaut werden, dass sie aus einer Mehrzahl von Modulen und vorzugsweise weiteren Funktionseinheiten zur Speicherung, Verarbeitung und/oder Verladung von Wasserstoff zusammengesetzt wird, die bedarfsgerecht an die gewünschte Produktionskapazität von Wasserstoff angepasst wird.

Eine entsprechend gewählte Mehrzahl von Modulen wird darüber hinaus bevorzugt an die Anzahl von zusätzlich vorgesehenen, ebenfalls schwimmfähigen Funktionseinheiten angepasst. Derartige Funktionseinheiten werden ebenfalls bedarfsgerecht, insbesondere in Abhängigkeit der gewählten Art der Wasserstoffspeicherung und Wasserstoffabführung ausgebildet und ausgewählt. Funktionseinheiten verfügen insbesondere über Befestigungselemente zum Befestigen von schwimmfähigen Fahrzeugen zum Gastransport, Hochdruck- oder Niederdruckspeicher für Wasserstoff, Kompressoren, Stellelemente, Sensor- und Sicherheitselemente und/oder Anlagen zur Produktion von Ammoniak.

Der Ammoniak lässt sich beispielsweise mit dem Haber-Bosch-Prozess herstellen, bei dem die Gase Stickstoff und Wasserstoff bei etwa 200 bar und 450 °C an einem Eisenkatalysator miteinander gemäß N₂ +3H₂ → 2NH₃ reagieren, wobei der Stickstoff vorzugsweise über eine Luftverflüssigung und der Wasserstoff mit Hilfe wenigstens eines auf einem erfindungsgemäß ausgeführten Modul angeordneten Elektrolyseurs erzeugt wird. Das gasförmige Reaktionsprodukt NH₃ wird dann bevorzugt entweder durch Kühlung oder Absorption in Wasser verflüssigt. Alternativ wird der Ammoniak mittels einer Brennstoffzelle erzeugt, wobei an der mit einem Katalysator beschichteten Anode Wasser in Sauerstoff, H+-lonen und Elektronen aufgespalten werden und die Protonen durch einen Elektrolyten und eine Membran zur Kathode diffundieren, während die Elektronen diese über eine Drahtverbindung. An der Kathode werden Stickstoff-Moleküle mittels Katalysators in N-Atome aufgespalten, die dann mit den Protonen und Elektronen zu NH₃ reagieren.

Im Weiteren ist auf vorteilhafte Weise vorgesehen, dass ein erfindungsgemäß ausgeführtes Modul selbst oder eine mit diesem verbundene Funktionseinheit über wenigstens ein Anschlusselement verfügt, an das eine Pipeline zum Transport von Wasserstoff angebunden und oder anbindbar ist.

Wesentlich ist, dass sie erfindungsgemäße Anlage über eine Mehrzahl von Modulen verfügt, deren Anzahl, wie zuvor erwähnt, an die benötigte Produktionskapazität von Wasserstoff anpassbar ist und aufgrund des erfindungsgemäßen Aufbaus der Module eine entsprechende Anlage flexibel an unterschiedlichen Orten einsetzbar oder an unterschiedliche Orte verbringbar ist. Für den Transport können wahlweise geeignete Transportfahrzeuge eingesetzt werden oder die Module lassen sich mit Hilfe eines mit der Tragstruktur wenigstens mittelbar verbundenen Antrieb autonom bewegen. Von besonderem Vorteil ist es, wenn eine derartige Anlage in einem Gebiet mit einer vergleichsweise langen Sonnenscheindauer, insbesondere in Äquatornähe, zum Einsatz kommt. Aufgrund der geeigneten Ausführung der einzelnen Module ist es hierbei generell denkbar, auch eine Anlage mithilfe der an zumindest einem Modul vorgesehenen Antriebseinheit zu bewegen. Bevorzugt erfolgt die Bewegung mit einer Antriebseinheit, die von einer Steuereinheit gesteuert wird, sodass die Anlage auf vorteilhafte Weise an einen gewünschten Ort bewegbar oder die Positionierung der Anlage bedarfsgerecht zu verändern ist.

Die Positionierung der einzelnen erfindungsgemäß ausgeführten Module und/oder der Anlage, die aus wenigstens zwei Modulen und/oder aus einem Modul und einer geeigneten Funktionseinheit gebildet wird, kann mithilfe geeigneter Navigationseinheiten, beispielsweise unter Zuhilfenahme von GPS-Daten, erfolgen.

Gemäß einer speziellen Weiterbildung der Erfindung ist ferner vorgesehen, dass wenigstens eines der Module einer Anlage über eine Verstelleinheit verfügt, um die Länge der Verbindung und so den Abstand zwischen verbundenen Modulen und/oder zwischen einem Modul und einer damit verbundenen Funktionseinheit zu verändern. Wie bereits erwähnt, ist es von Vorteil, wenn die einzelnen Module oder ein Modul und eine Funktionseinheit mithilfe eines geeigneten Konnektors, durch den elektrische Energie und Wasserstoff transportiert werden können, verbunden sind. Von besonderem Vorteil ist es, wenn die einzelnen Konnektoren geeignet sind, beispielsweise aufgrund von Seegang oder Strömung auftretende Kräfte, insbesondere Zug- oder Druckkräfte zwischen den einzelnen Modulen aufzunehmen. Ganz besonders vorteilhaft ist, wenn die Konnektoren ausgebildet sind, um unter Ausnutzung der aufgenommenen Kräfte elektrische Energie zu erzeugen und an ein Modul und/oder eine Funktionseinheit zur Nutzung und/oder Speicherung zu übertragen.

Die Verstellung des Abstandes zwischen zwei Modulen und/oder zwischen einem Modul und einer Funktionseinheit erfolgt vorzugsweise in Abhängigkeit der in einem Gewässer vorherrschenden Seegangs oder der Strömung. Vorzugsweise erfolgt die Verstellung automatisch mit einer Regelung, der gemessene oder prognostizierte Werte in Bezug auf Seegang und/oder Strömung zugrunde gelegt werden.

Im Weiteren stellen die Kollektoren auf vorteilhafte Weiser Datenübertragungsstreckend zur Verfügung, über die uni oder bidirektional Daten zwischen benachbarten Modulen und/oder zwischen einem Modul und einer benachbarten Funktionseinheit austauschbar sind. Ergänzend oder alternativ findet ein Datenaustausch zwischen Modulen und/oder Funktionseinheiten drahtlos statt.

Im Übrigen ist es auch in Bezug auf die erfindungsgemäße Anlage denkbar, dass auf wenigstens einem der verbundenen Module und/oder Funktionseinheiten zumindest eine weitere Einheit zur Erzeugung elektrischer Energie, wie etwa ein Windrad mit um eine horizontale oder vertikale Achse drehbarem Rotor, ein Wellen- oder Strömungsgenerator oder ein sogenannter Flugdrache. Auch eine Bewegung wenigstens eines erfindungsgemäßen Moduls mithilfe eines Segels, beispielsweise mit einem über wenigstens eine Seilwinde geführten Drachen ist denkbar.

In einer weiteren besonders geeigneten Ausgestaltung der Erfindung verfügt wenigstens eines der Module und/oder zumindest eine der Funktionseinheiten einer Anlage über eine Gasverdichtereinheit, eine Brennstoffzelle zur Erzeugung elektrischer Energie aus Wasserstoff, eine Befestigungseinheit zur Befestigung von Wasserfahrzeugen, eine Übergabestelle zur Anbindung einer Schlauch und/oder Rohrleitung, einen Druckgasspeicher für gasförmigen Wasserstoff, eine Gaszerlegungsanlage, eine Gasverflüssigungsanlage, einen Kryotank, eine Anlage zur Erzeugung von Ammoniak aus Wasserstoff, einen Wassertank und/oder einen Speicher für elektrische Energie. Wie die zuvor beschriebene Ausführungsform verdeutlicht, zeichnet sich eine erfindungsgemäße Anlage dadurch aus, dass die einzelnen Module und/oder Funktionseinheiten an die jeweiligen Anforderungen angepasst und zusammengestellt werden können. Generell ist es denkbar, dass erzeugter Wasserstoff über längere Zeit als Wasserstoff oder in Form von Ammoniak speicherbar ist oder aber direkt über eine geeignete Verladestelle auf ein Schiff verladen wird. Es wird deutlich, dass sich die Erfindung gerade dadurch auszeichnet, dass einzelne Module bedarfsgerecht, bevorzugt aus Standardkomponenten herstellbar sind und sich aus diesen Modulen, ggf. ergänzt durch spezielle Funktionseinheiten eine geeignete Anlage zur Erzeugung von Wasserstoff zusammenstellen lässt. So lässt sich Wasserstoff besonders angepasst an die jeweilige Situation, kosteneffektiv bei gleichzeitig hoher Ausfallsicherheit herstellen, speichern, verladen und bei Bedarf zu Ammoniak umsetzen.

In einer weiteren speziellen Ausführungsform der Erfindung ist eine Steuereinheit vorgesehen, durch die auf der Grundlage von Kennwerten, die auch Information über eine Position des wenigstens einen Moduls und/oder der wenigstens einen Anlage, einen Sonnenstand und/oder eine Sonnenscheindauer, Wetterparameter, Strömungsparameter, Gezeiteninformationen, Wellenparameter, Betriebsparametern, die spezifisch für die Erzeugung und Speicherung der elektrischen Energie und/oder des Wasserstoffs und/oder Abnahmekapazitäten bei der Verladung des Wasserstoffs berücksichtigen, ein Steuersignal zur Initiierung einer Bewegung, einer Trennung und/oder einer Verbindung von Modulen und/oder Funktionseinheiten generierbar ist. Bevorzugt erfolgt das Trennen und das Verbinden der einzelnen Module und/oder Funktionseinheit einer insgesamt schwimmfähigen Anlage automatisiert, wenigstens teilautomatisiert. Hierbei sind die Schnittstellenelemente der Module und/oder die Konnektoren, durch die die jeweilige Verbindung hergestellt wird, mit geeigneten Kupplungselementen ausgeführt, sodass eine sichere Verbindung mithilfe von elektrischen, mechanischen, elektromechanischen oder magnetischen Kräften herstellbar ist.

Wie obigen Ausführungen zeigen, beruht die Erfindung im Wesentlichen auf einem speziell ausgebildeten, robusten und bedarfsgerecht konfigurierbaren Modul sowie der Möglichkeit, eine Mehrzahl derartiger Module zu einer Anlage zur Wasserstofferzeugung zusammenzukoppeln. Es wird somit eine bedarfsgerechte Erzeugung von Wasserstoff ermöglicht, die bevorzugt auf einem Binnengewässer oder dem offenen Meer erfolgen kann. Nichtsdestotrotz ist es denkbar, die Module derart auszuführen, dass sie mit ihrem Traggestell jeweils auf dem Boden, und damit an Land abgesetzt und dann verbunden werden. In Abhängigkeit der benötigten Produktionskapazität einer geplanten Anlage lassen sich bedarfsgerecht eine unterschiedliche Anzahl von Modulen zusammenkoppeln. Ausfall, Wartung oder Reparatur einzelner Module fallen hierbei nicht so stark ins Gewicht, wie dies beispielsweise bei Ausfall einzelner Komponenten einer vergleichsweise großen Kraftwerksanlage, wie sie oftmals bei der Umwandlung fossiler Energieträger in elektrische Energie zum Einsatz kommen, der Fall ist.

Zur Veranschaulichung der Erfindungen wird diese im Folgenden ohne Beschränkung des allgemeinen Erfindungsgedankens anhand einzelner Ausführungsbeispiele unter Bezugnahme auf Figuren näher erläutert. Dabei zeigen:
- Fig. 1:: Erste Ausführungsform eines erfindungsgemäß ausgeführten Moduls in einer Drauf- und einer Seitenansicht;
- Fig. 2:: zweite Ausführungsform eines erfindungsgemäß ausgeführten Moduls in einer Drauf- und einer Seitenansicht;
- Fig. 3:: dritte Ausführungsform eines erfindungsgemäß ausgeführten Moduls in einer Drauf- und einer Seitenansicht;
- Fig. 4:: Prozessschema der Wasserstoffproduktion, wie sie mithilfe wenigstens eines erfindungsgemäß ausgeführten Moduls realisierbar ist sowie
- Fig. 5:: Draufsicht auf eine Anlage zur Wasserstofferzeugung mit einer Mehrzahl von miteinander verbundenen erfindungsgemäß ausgeführten Modulen zur Wasserstofferzeugung sowie Funktionseinheiten zum Speichern, Verdichten und Verladen von Wasserstoff.

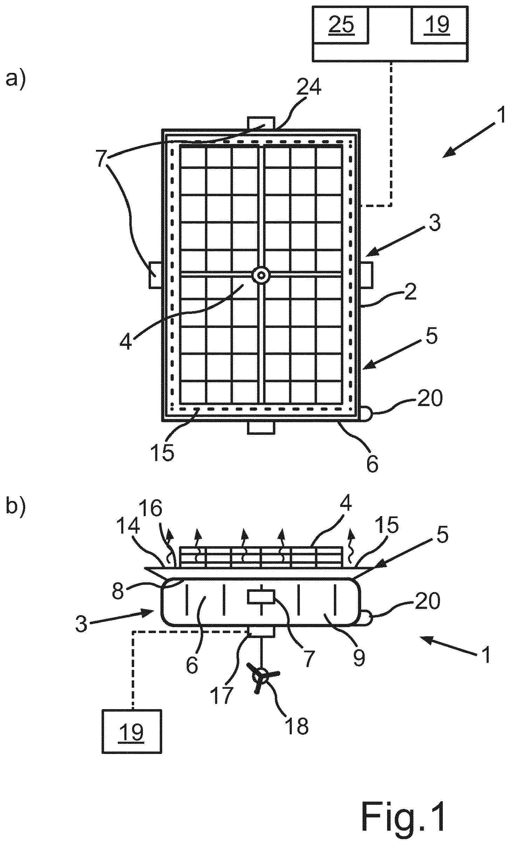

Fig. 1 zeigt eine erste Ausführungsform eines erfindungsgemäß ausgeführten Moduls 1 wobei in Figur 1a) eine Draufsicht und in Fig. 1b) eine Seitenansicht des Moduls 1 dargestellt ist. Das in Fig. 1 dargestellte Modul 1 verfügt über ein Fotovoltaikmodul mit einer Mehrzahl von Solarzellen 4 zur Produktion von elektrischer Energie. Unterhalb der Solarzellen 4 ist ein Elektrolyseur 3, hier in Form einer Protonen-Austausch-Membran-Brennstoffzelle (PEM-Brennstoffzelle), angeordnet, der aus der von den Solarzellen 4 erzeugten elektrischen Energie durch Elektrolyse Prozesswasser spaltet und hieraus Wasserstoff sowie Sauerstoff erzeugt. Der vom Elektrolyseur 3 erzeugte Wasserstoff wird anschließend einem weiteren, modulintegrierten Anlagenelement zur Prozessierung zugeleitet, das gemäß der in Fig. 1 gezeigten Ausführungsform als Wasserstoffspeicher ausgebildet ist. Ferner verfügt das Modul 1 über ein Schnittstellenelement 7 mit Kupplung, an die ein in Fig. 1 nicht dargestellter Konnektor 27 zur Herstellung einer Verbindung mit einem weiteren Modul 1 oder einer Funktionseinheit 8 anschließbar ist.

Sämtliche Komponenten des Moduls 1 sind zumindest mittelbar mit einer Tragstruktur 2, die eine Auftriebskraft bereitstellt, verbunden, wobei gemäß dem in Fig. 1 gezeigten Ausführungsbeispiel der Wasserstoffspeicher 9 einen Teil der Tragstruktur 2 bildet. Das Modul 1 und die Tragstruktur 2 mit der durch sie bewirkten Auftriebskraft sind derart dimensioniert, dass das Modul 1 sowohl in leerem Zustand als auch in mit Wasserstoff gefüllten Zustand des Wasserstoffspeichers 9 schwimmfähig ist, wobei es unerheblich ist, ob es sich bei dem Gewässer, auf dem das Modul 1 schwimmen soll, um ein Gewässer mit Salzwasser, Süßwasser oder Brackwasser handelt.

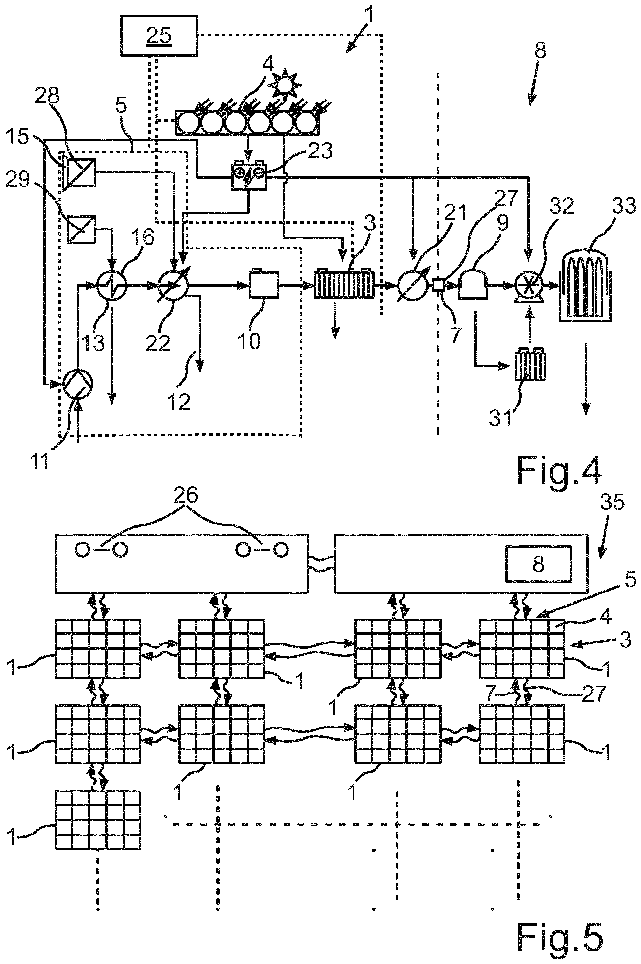

Die verfahrenstechnische Verschaltung der einzelnen Komponenten des Moduls 1 sowie der zur Wasserstofferzeugung genutzte Prozess, wie er mit dem in Fig. 1 dargestellten Modul realisierbar ist, werden eingehend im Zusammenhang mit der Beschreibung der Fig.4 erläutert.

Wesentlich für das gezeigte Modul 1 ist, dass es sich um eine kompakte und robuste Einheit handelt, in der sämtliche für die Produktion und Speicherung von Wasserstoff erforderlichen Komponenten kombiniert und derart zumindest mittelbar mit der Tragstruktur 2 in Verbindung stehen, dass das Modul 1 in Wasser schwimmfähig ist.

Des Weiteren verfügt das Modul 1 über eine Wasserbereitstellungsanlage 5, die dem Gewässer, auf dem das Modul 1 schwimmt, Wasser entnimmt, aufbereitet und dem Elektrolyseur als Prozesswasser zuführt. Aus dem Prozesswasser wird letztendlich durch Spaltung in Sauerstoff und Wasserstoff der gewünschte Wasserstoff erzeugt. Die Wasseraufbereitungsanlage 5 verfügt über eine Pumpe 11, vorzugsweise eine Tauchpumpe, und einen Wasserfilter 28 sowie eine Sensoreinheit 22 zur Messung der elektrischen Leitfähigkeit des dem Gewässer entnommenen Wassers, insbesondere Salzwasser, und führt dieses entweder direkt oder nach Zwischenspeicherung in einem Wassertank 10 schließlich als Prozesswasser dem Elektrolyseur 3 zu. Generell ist es denkbar, dass dem dem Gewässer entnommenen Wasser, insbesondere bei zu hoher Leitfähigkeit und damit Salzgehalt, Süßwasser entweder außerhalb oder im Wassertank zugemischt bzw. zudosiert wird, um Prozesswasser mit dem vom Elektrolyseur benötigten Eigenschaften zu erzeugen.

Die Elektroden des Elektrolyseurs 3 sind derart gestaltet, dass das Material beständig gegen Prozesswasser mit einem zulässigen Salzgehalt ist, insbesondere eine gewünschte Mindestbetriebszeit gewährleistet ist. Das nicht mehr benötigte Wasser wird von der Wasserbereitstellungsanlage 5 über einen Wasserauslass 12 in das Gewässer abgegeben.

Im Übrigen verfügt die Wasserbereitstellungsanlage 5 über Mittel, um auch aus der Umgebungsluft Wasser zu gewinnen und dieses zumindest teilweise als Prozesswasser dem Elektrolyseur 3 zuzuführen. Gemäß dem in Fig. 1 gezeigten Ausführungsbeispiel verfügt die Wasserbereitstellungsanlage 5 über eine Einheit 14 zur Gewinnung von Wasser aus der Umgebungsluft, die sowohl über ein Kondensationselement 16 mit einer Oberfläche, deren Temperatur in Abhängigkeit der Luftfeuchte der Umgebungsluft abgesenkt werden kann, und über ein Einrichtung 15 zum Auffangen von Niederschlag.

Mit Hilfe der Einheit 14 zur Gewinnung von Wasser aus der Umgebungsluft, ist es möglich, insbesondere in den Nachtstunden Wasser zu gewinnen, indem die Oberflächentemperatur eines Kondensationselements 16 unter die Taupunkttemperatur der Umgebungsluft abgesenkt wird. Die Absenkung der Temperatur der Oberfläche wird gemäß dem in Fig. 1 gezeigten Ausführungsbeispiel mithilfe einer Strahlungskühlung, die Infrarotstrahlung abstrahlt, ermöglicht. Hierbei wird die Temperatur der gegenüber der Horizontalen geneigten Oberfläche des Kondensationselements 16 unter die Taupunkttemperatur der Umgebungsluft abgesenkt und das auskondensierende Wasser über die geneigte Oberfläche abgeleitet und entweder direkt oder nach Zwischenspeicherung im Wassertank 10 bedarfsgerecht als Prozesswasser dem Elektrolyseur zugeführt. Ein Mischen mit Wasser, das dem Gewässer entnommen wurde, erfolgt insbesondere dann, wenn der Salzgehalt des dem Gewässer entnommenen Wassers zu hoch ist, um dieser direkt dem Elektrolyseur zuzuleiten.

Im Weiteren sieht das in Fig. 1 gezeigte Modul 1 eine Einrichtung 15 zum Auffangen von Regenwasser vor, die eine die Solarzellen 4 umfangsseitig umgebende Rinne aufweist, in der insbesondere Regenwasser aufgefangen und wiederum entweder direkt oder nach Zwischenspeicherung im Wassertank 10 bedarfsgerecht als Prozesswasser dem Elektrolyseur 3 zuführbar ist. Um einen geeigneten Betrieb zu ermöglichen, ist eine Steuereinheit 25 vorgesehen, um den Salzgehalt des Prozesswassers durch geeignetes Mischen von dem dem Gewässer entnommenen Wasser mit Regenwasser und/oder der Umgebungsluft entnommenen Wasser auf einen Wert einzustellen, sodass der Salzgehalt unterhalb eines oberen Grenzwerts liegt, der die Beständigkeit der Elektroden des Elektrolyseurs 3 zumindest bei längerem Betrieb gefährden würde. Das Modul 1 verfügt über eine zentrale Steuerung mit einer Steuereinheit 19, über die eine gezielte Bewegung des Moduls 1 initiierbar ist, wie im Folgenden noch erläutert wird, und über eine Steuereinheit 25, die die für die Produktion von elektrischer Energie und Wasserstoff erforderlichen Komponenten steuert. Grundsätzlich ist es in diesem Zusammenhang denkbar, dass sich die für die Steuerung erforderlichen Daten und Software auf dem Modul 1 und/oder zumindest teilweise auf einer entfernten Datenverarbeitungseinheit befinden.

Wie in der in Fig. 1b) gezeigten Seitenansicht des Moduls zu erkennen ist, ist unterhalb der Wasseroberfläche an der Tragstruktur 2 des Moduls 1 eine Antriebseinheit 17 mit einem Elektromotor und ein davon antreibbarer Propeller 18 vorgesehen, der eine bedarfsgerechte Bewegung des Moduls 1 ermöglicht. Um eine möglichst zielgerichtete Bewegung des Moduls 1 sicherzustellen, ist der Propeller 18 relativ zur Tragstruktur 2 drehbar gelagert. Alternativ kann eine drehbare Wasserdüse oder, insbesondere bei nicht drehbarem Propeller oder Wasserdüse, ein schwenkbar gelagertes Ruderblatt vorgesehen sein. Mit Hilfe der Antriebseinheit 17 und des Propellers kann ein erfindungsgemäß ausgeführtes Modul 1 zielgerichtet bewegt werden, sodass dieses mit anderen Modulen 1 und/oder Funktionseinheiten 8 verbunden oder sogar eine Anlage, die eine Mehrzahl von verbundenen Modulen 1 aufweist, bewegt werden. So ist insbesondere eine gezielte Bewegung wenigstens eines Moduls 1, beispielsweise in Abhängigkeit eines drohenden Sturms oder bestimmter Gezeitenströme, an eine vorteilhafte Position realisierbar. Eine entsprechende Bewegung kann selbstverständlich auch Abhängigkeit des Sonnenstandes, insbesondere der Sonnenscheindauer in einem Seegebiet, der Sonnenhöhe und/oder des Azimutwinkels der Sonne erfolgen.

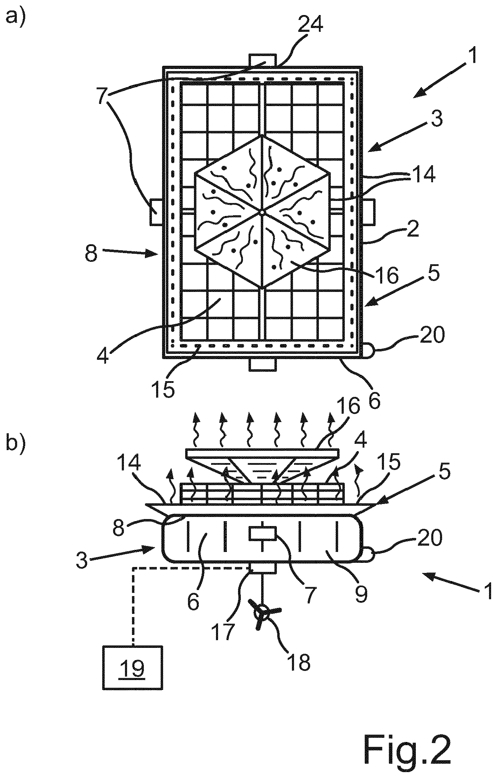

Fig. 2 zeigt in den Abbildungen 2a) eine Draufsicht und 2b) eine Seitenansicht eines Moduls 1, das gemäß einer zweiten Ausführungsform der Erfindung ausgebildet ist. Das Modul 1 gemäß Fig. 2 unterscheidet sich von dem gemäß Fig. 1 dadurch, dass die Einheit 14 zur Gewinnung von Wasser aus der Umgebungsluft über ein weiteres Kondensationselement 16 verfügt, an dessen Oberfläche zielgerichtet eine Kondensation herbeiführbar ist. Dieses Kondensationselement 16, das Teil der Wasserbereitstellungsanlage 5 ist, ist mittig in Bezug auf die rechteckige Oberfläche des Moduls 1 angeordnet und verfügt über einen Pfosten mit relativ dazu klappbaren Kondensationsflächen. Zur Gewinnung von Wasser aus Umgebungsluft, und zwar unabhängig davon, ob Regenwasser oder Kondensat gewonnen werden soll, befinden sich die Kondensationsflächen in ausgeklapptem Zustand und sich gegenüber der Horizontalen geneigt, sodass auftreffendes Regenwasser oder aus der Umgebungsluft kondensierendes Wasser in Richtung des Pfostens abgeleitet wird. Im Inneren oder an dem Pfosten befindet sich ein Schlauch oder eine Rohrleitung, über die das gewonnene Wasser abgeleitet und entweder direkt oder nach Zwischenspeicherung im Wassertank 10 dem Elektrolyseur 3 zugeführt wird.

Da die Kondensationsflächen in ausgeklapptem Zustand das Fotovoltaikmodul mit den Solarzellen 4 zumindest bereichsweise überdecken und zum Teil abschatten, erfolgt ein Ausklappen der Kondensationsflächen vorzugsweise in der Nacht oder bei nur minimalem Sonnenschein, beispielsweise bei bewölktem Himmel. Auch in diesem Fall ist es möglich, über die geneigten Kondensationsflächen des Kondensationselements 16, die vorzugsweise mit einer Strahlungskühlung unter die Taupunkttemperatur der Umgebungsluft abgekühlt werden, Wasser durch Kondensation aus der Umgebung zu gewinnen und dieses Wasser zwischenzuspeichern oder direkt bei Bedarf als Prozesswasser dem Elektrolyseur 3 des Moduls 1 zuzuführen.

Im Übrigen wird auch gemäß dem in Fig. 2 gezeigten Ausführungsbeispiel durch den Elektrolyseur 3 des Moduls 1 im Wege einer Elektrolyse das Prozesswasser in Wasserstoff und Sauerstoff gespalten, wobei der erzeugte Sauerstoff in die Umgebung abgeleitet wird.

Der erzeugte Wasserstoff wird in einem Wasserstoffspeicher 9, insbesondere einem Druckgasspeicher, der zumindest teilweise die Tragstruktur 2 des Moduls 1 bildet, gespeichert. Ferner verfügt auch das in Fig.2 gezeigte Modul über eine Antriebseinheit 17 mit einem Elektromotor und über einen davon antreibbaren Propeller 18, sodass das Modul 1, wie bereits beschrieben, bedarfsgerecht bewegt werden kann.

Sowohl das Modul 1 gemäß Fig. 1 als auch das gemäß Fig. 2 verfügen als wesentliche Komponenten über wenigstens ein Schnittstellenelement 7, über das eine Verbindung mit wenigstens einem weiteren erfindungsgemäß ausgeführten Modul 1 und/oder einer Funktionseinheit 8 zur Speicherung, Verarbeitung, Weiterleitung und/oder Verladung von Wasserstoff verbunden werden kann. Für die Verbindung werden geeignete Konnektoren verwendet, über die sowohl Wasserstoff als auch elektrische Energie zwischen den einzelnen Modulen 1 und/oder zwischen Modulen 1 und Funktionseinheiten 8 ausgetauscht werden können. Auch die Übertragung von Daten ist denkbar, wobei eine Datenübertragung zwischen den einzelnen Modulen 1 und/oder zwischen Modulen 1 und Funktionseinheiten 8 auch drahtlos, insbesondere unter Zwischenschaltung von Verstärkereinheiten erfolgen kann.

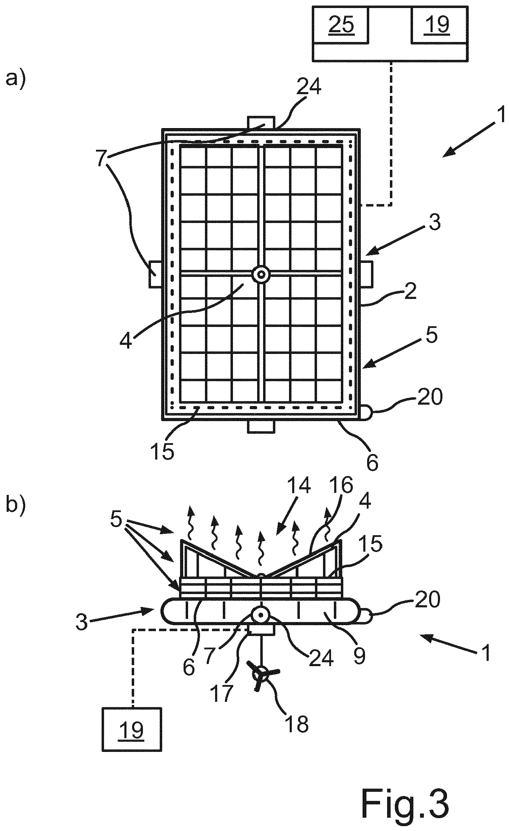

Fig. 3 zeigte eine dritte Ausführungsform eines erfindungsgemäß ausgeführten Moduls 1 in einer Drauf- und einer Seitenansicht. Gemäß dem in Fig. 3 gezeigten Ausführungsbeispiel sind die Solarzellen 4 bzw. deren Oberflächen derart angeordnet, dass ein Querschnitt V-förmig ist. Auf die Oberflächen auftreffender Niederschlag, insbesondere Regen, kann so einfach ablaufen und wird an den unteren Kanten der Solarzellen in einem Abfluss oder einer Rinne der Wasserbereitstellungsanlage 5, die zwischen den Solarzellen 4 angeordnet ist, aufgefangen. Ebenso ist es denkbar, dass zumindest eine Kante, an der sich die unteren Enden der Solarzellen 4 berühren, wenigstens teilweise geneigt ist, sodass aufgefangenes Wasser abfließt und von der Wasserbereitstellungsanlage 5 zur Erzeugung von Prozesswasser verwendet wird. Bevorzugt wird ein Modul 1, wie es in Fig. 3 gezeigt ist, derart, insbesondere auf einem Gewässer, angeordnet oder fixiert, dass eine Linie, die von den sich berührenden unteren Kanten der Solarzellen 4 gebildet wird, wenigstens nahezu in Nord-Süd-Richtung verläuft.

Fig. 4 zeigt ein verfahrenstechnisches Schema eines Prozesses zur Erzeugung von Wasserstoff, wie er mit einem erfindungsgemäß ausgeführten Modul 1 zur Erzeugung von Wasserstoff umgesetzt werden kann. Erfindungsgemäß ist ein Fotovoltaikmodul mit Solarzellen 4 vorgesehen, das die von den verschiedenen Verbrauchern des Moduls 1 benötigte elektrische Energie liefert. Die von den Solarzellen 4 erzeugte elektrische Energie wird entweder direkt genutzt oder aber in einem Speicher für elektrische Energie, insbesondere einem Akkumulator, etwa einem Lithium-Ionen-Akkumulator, zwischengespeichert.

Von wesentlicher Bedeutung ist, dass das Modul 1 eine Wasserbereitstellungsanlage aufweist, mit der Wasser aus dem Gewässer, auf dem das Modul schwimmt, und aus der Umgebungsluft gewinnen kann. Mithilfe einer Pumpe 11, die bevorzugt als Tauchpumpe ausgeführt ist, wird dem Gewässer, auf dem das Modul schwimmt, zunächst Wasser entnommen und über einen als Kondensationselement 16 vorgesehenen Kondensator 30 geführt. In dem Kondensator 30 findet eine Wärmeübertragung zwischen dem angesagten Wasser des Gewässers, beispielsweise Seewasser, und angesaugter Umgebungsluft, die zuvor durch einen Luftfilter 29 geleitet wurde, statt. Hierbei wird in dem Kondensator 30 das angesaugte Wasser erwärmt und die Umgebungsluft abgekühlt, sodass es innerhalb des Luftstroms zu einer Kondensation kommt, sobald die Temperatur der angesagten Luft unter deren Taupunkttemperatur absinkt. Das erwärmte Wasser wird über einen Wasserauslass 12 in das Gewässer zurückgeleitet. Das im Kondensator 30 gewonnene Wasser wird einem Wassertank 10 zugeführt, wobei das Kondenswasser wahlweise, je nach den zuletzt herrschenden Wetterverhältnissen, mit bereits vorhandenem Regenwasser oder auf sonstige Weise aus der Umgebungsluft gewonnenem Wasser gemischt wird. Bevor das gegebenenfalls auf unterschiedliche Arten gewonnene Wasser, das in Abhängigkeit der Ausführung der Wasserbereitstellungsanlage 5 auch Seewasser enthalten kann, dem Wassertank 10 zugeführt wird, wird mithilfe wenigstens einer Sensoreinheit 22 zumindest ein Parameter, insbesondere die Leitfähigkeit des Wassers gemessen. Dies ist wichtig, um sicherzustellen, dass das gewonnene oder aufbereitete Wasser für eine Verwendung als Prozesswasser im Elektrolyseur 3 zur Erzeugung von Wasserstoff geeignet ist, insbesondere der Salzgehalt keinen unzulässigen Grenzwert überschreitet. Ist der Salzgehalt des Prozesswassers zu hoch, kann dies zu Beschädigung der Elektroden des Elektrolyseurs 3 führen. Nicht geeignetes, nicht benötigtes oder überschüssiges Prozesswasser wird ebenfalls in das umgebende Gewässer abgeführt.

Wie die obigen Ausführungen zeigen, wird mit der Wasserbereitstellungsanlage 5 dem Elektrolyseur bedarfsgerecht Prozesswasser zugeführt. Bei dem Elektrolyseur handelt es sich gemäß dem in Fig. 4 gezeigten Ausführungsbeispiel um eine Brennstoffzelle, insbesondere eine Protonen-Austausch-Membran-Brennstoffzelle (PEM-Brennstoffzelle), die revers als Elektrolyseur 3 genutzt wird. Die für die Aufspaltung des Prozesswassers in Wasserstoff und Sauerstoff im Wege der Elektrolyse benötigte elektrische Energie wird von den Solarzellen 4 oder aus der Batterie dem Elektrolyseur 3 zugeführt. An der als an Kathode dienenden Elektrode der Brennstoffzelle entsteht Wasserstoff, während an der als Anode dienenden Elektrode Sauerstoff entsteht. Der entstehende Sauerstoff wird abgeführt, während der erzeugte Wasserstoff abgeleitet und hierbei mithilfe einer geeigneten Sensoreinheit 21 die Wasserstoffkonzentration des abgeführten Gasstroms gemessen wird.

Gemäß dem in Fig. 4 gezeigten Ausführungsbeispiel wird der erzeugte Wasserstoff somit in ein spezielles Anlagenelement 6 des Moduls 1 geführt, in dem eine Weiterleitung und Erfassung der Gaskonzentration des Gasstroms erfolgt. Weiterhin wird der erzeugte Wasserstoff über ein Schnittstellenelement 7 mit Kupplung und einem Konnektor 27, der eine Verbindung zu einer weiteren Funktionseinheit 8 herstellt, in einen auf der Funktionseinheit vorgesehenen Wasserstoffspeicher 9 gefördert. Alternativ kann der Wasserstoffspeicher 9 auch direkt auf dem Modul 1 angeordnet werden und bildet zumindest einen Teil der Tragstruktur 2.

Wie in Fig. 4 gezeigt wird der vom Modul 1 über den Konnektor 27 zugeleitete Wasserstoff zunächst in einem ersten Wasserstoffspeicher 9 der Funktionseinheit 8 in nicht komprimierten Zustand zwischengespeichert. Ein Teil dieses Wasserstoffs wird einer Brennstoffzelle 31 zugeführt, die elektrische Energie erzeugt, welche zum Antrieb eines Kompressors 32 der Funktionseinheit 8 verwendet wird. Der Kompressor 31 verdichtet einen großen Teil des übrigen im ersten Wasserstoffspeicher 9 bevorrateten Wasserstoffs und fördert diesen in einen Hochdruckgasspeicher 33, in dem der Wasserstoff bis zur weiteren Verwendung oder seinem Abtransport, etwa mit Hilfe eines seegängigen Gastankers, gespeichert wird. Hierfür verfügt entweder die Funktionseinheit 8 oder eine weitere Plattform, die mit dieser verbunden ist, über eine Anlegeeinrichtung 26 mit Befestigungselementen zum Befestigen von Schiffen 26.

Im Prozess überschüssiger Wasserstoff wird in die Umgebung abgeleitet.

Fig. 5 zeigt schließlich eine Draufsicht auf eine Anlage 34, die eine Mehrzahl von erfindungsgemäß ausgeführten, auf der Wasseroberfläche schwimmenden Modulen 1 zur Wasserstofferzeugung sowie spezielle Funktionseinheiten 8 aufweist, wobei die Module 1 teilweise mit anderen Modulen 1 oder mit einer der Funktionseinheiten verbunden sind. Die einzelnen Module 1 verfügen jeweils über geeignete Schnittstellenelemente 7, an denen Konnektoren 27 zur Herstellung einer Verbindung, über die zumindest Wasserstoff und elektrische Energie, vorzugsweise auch Daten, übertragen werden können, befestigt sind. Darüber hinaus nehmen die Konnektoren 27 sowohl die während des Betriebs, beispielsweise aufgrund von Seegang oder Strömungen auftretenden Kräfte auf. Die einzelnen Schnittstellenelemente 7 und/oder die Konnektoren 27 sind bevorzugt ferner derart ausgebildet, dass unter Ausnutzung mechanischer, elektrischer, elektropneumatischer oder magnetischer Kräfte eine Dämpfung und/oder Erzeugung elektrischer Energie realisiert wird.

Von den in Fig. 5 in einer Draufsicht dargestellten Modulen 1, die als Hauptkomponenten jeweils ein Fotovoltaikmodul mit Solarzellen 4, eine Wasserbereitstellungsanlage 5 und einen Elektrolyseur 3, insbesondere in Form einer PEM-Brennstoffzelle, aufweisen, verfügen zumindest einzelne der Module 1 gleichzeitig über einen Wasserstoffspeicher 9, der Teil der schwimmfähigen Tragstruktur 2 des jeweiligen Moduls 1 ist. Im Weiteren sind spezielle Funktionseinheiten 8 vorgesehen, die ebenfalls über hierfür vorgesehene Verbindungen mit Konnektoren 27 verfügen, die bevorzugt elektrische Energie und/oder Wasserstoff mit wenigstens einem erfindungsgemäß ausgeführten Modul 1 oder wenigstens einer weiteren Funktionseinheit 8 austauschen.

Die ebenfalls schwimmfähigen Funktionseinheiten 8, die spezifisch nach den speziellen Anforderungen ausgebildet sind, bieten eine flexible Möglichkeit, den erzeugten Wasserstoff zu speichern, zu verarbeiten, beispielsweise Ammoniak zu erzeugen und/oder den Wasserstoff weiterzuleiten, insbesondere auf Gastanker zu verladen.

Einige der im Außenbereich vorgesehenen Funktionseinheiten 8 verfügen über eine geeignete Anlegeeinrichtung 26 mit Befestigungselementen zum Befestigen von Schiffen, insbesondere von seegängigen Gastankern. Denkbar ist darüber hinaus, dass zumindest einige der Module 1 der in Fig. 4 gezeigten Anlage 34, die eine Produktionseinheit zur Erzeugung von Wasserstoff darstellt, weitere Elemente zur Erzeugung elektrischer Energie aufweisen, die etwa Wind-, Wellen- oder Strömungskräfte nutzen, um hieraus elektrische Energie zu erzeugen.

Wesentlich an der in Fig. 5 gezeigten Anlage 34 zur Erzeugung, Speicherung und Verladung von Wasserstoff ist, dass diese bedarfsgerecht an die für die Produktion vorgesehene Menge von Wasserstoff anpassbar ist. Wie durch die Punktlinien angedeutet kann generell eine beliebige Anzahl kompakter, robuster Module 1, die gemäß der Erfindung ausgeführt sind, zu einer großen schwimmfähigen Anlage verbunden werden, durch die Wasserstoff unter Ausnutzung von Solarenergie erzeugt wird. Durch die Verschaltung einer Vielzahl einzelner kompakter Module 1 lassen sich vor allem Wartungs- und Reparaturarbeiten verhältnismäßig einfach ausführen, vor allem, ohne dass es zu einer erheblichen Reduzierung der Produktionsleistung der Anlage 34 kommt. Ebenso können einzelne Module 1 vergleichsweise leicht ausgetauscht werde, ohne dass dies erheblichen Einfluss auf den Betrieb der Anlage 34 hat.

Es lassen sich durch Nutzung der erfinderischen Idee somit besonders effektive, bedarfsangepasste und gleichzeitig ausfallsichere Anlagen 34 zur Erzeugung von grünem Wasserstoff realisieren, wobei nicht einmal die Bereitstellung einer Landfläche erforderlich ist. Da darüber hinaus zumindest einige der in Fig. 5 gezeigten Module 1 über Antriebseinheiten 17 mit einem Elektromotor und einem davon antreibbaren Propeller 18 verfügen, können die Module und damit auch die gesamte Anlage 34 an unterschiedliche Orte zu verbracht werden. Denkbar ist in diesem Zusammenhang, dass bei der Vorhersage bestimmter Sturmereignisse die Anlage 34 derart verlagert wird, dass diese, wenn überhaupt, nur von Ausläufern des vorhergesagten Sturms getroffen wird. Im Weiteren ist es denkbar, dass im Bereich der Schnittstellenelemente 7 der Module 1, insbesondere deren Kupplungen, Verstelleinheiten 29 angeordnet sind, sodass der Abstand zwischen den einzelnen Modulen 1, beispielsweise in Abhängigkeit des Seegangs, veränderbar ist, also die Konnektoren 27 zwischen den einzelnen Modulen 1 und oder Funktionseinheiten 8 gelängt oder verkürzt werden.

### Bezugszeichenliste

- 1: Modul
- 2: Tragstruktur
- 3: Elektrolyseur
- 4: Solarzelle
- 5: Wasserbereitstellungsanlage
- 6: Anlagenelement
- 7: Schnittstellenelement
- 8: Funktionseinheit
- 9: Wasserstoffspeicher
- 10: Wassertank
- 11: Pumpe
- 12: Wasserauslass
- 13: Wärmeübertrager
- 14: Einheit zur Gewinnung von Wasser aus der Umgebungsluft
- 15: Einrichtung zum Auffangen von Niederschlag
- 16: Kondensationselement
- 17: Antriebseinheit
- 18: Propeller
- 19: Steuereinheit zur Bewegung eines Moduls
- 20: Befestigungselement für Verankerung
- 21: Sensoreinheit zur Erfassung von Gaseigenschaften
- 22: Sensoreinheit zur Erfassung von Wassereigenschaften
- 23: Speicher für elektrische Energie
- 24: Verstelleinheit
- 25: Steuereinheit zum Betrieb eines Moduls
- 26: Anlegeeinrichtung
- 27: Konnektor
- 28: Wasserfilter
- 29: Luftfilter
- 30: Kondensator
- 31: Brennstoffzelle
- 32: Kompressor
- 33: Hochdruckgasspeicher
- 34: Anlage

## Patentansprüche

1. Modul (1) zur Erzeugung von Wasserstoff mit einer schwimmfähigen Tragstruktur (2), an der jeweils wenigstens mittelbar zumindest ein Elektrolyseur (3) zur Erzeugung von Wasserstoff, eine Solarzelle (4) zur Erzeugung elektrischer Energie, die sich in schwimmendem Zustand der Tragstruktur (2) oberhalb der Wasseroberfläche befindet und wenigstens mittelbar stromleitend mit dem Elektrolyseur (3) verbunden ist, zumindest eine Wasserbereitstellungsanlage (5) zur Versorgung des Elektrolyseurs (3) mit für die Erzeugung von Wasserstoff erforderlichem Prozesswasser, zumindest ein Anlagenelement (6) zur Speicherung, Weiterleitung und/oder Verarbeitung von Wasserstoff und wenigstens ein Schnittstellenelement (7), das zur Herstellung einer zumindest zum Transport von elektrischer Energie und/oder Wasserstoff geeigneten Verbindung mit einem weiteren Modul (1) zur Erzeugung von Wasserstoff und/oder einer schwimmfähigen Funktionseinheit (8) zur Erzeugung, Speicherung, Verdichtung, Verarbeitung, Verladung und/oder Weiterleitung von Wasserstoff eingerichtet ist, befestigt sind, wobei in schwimmendem Zustand durch die Tragstruktur (2) eine Auftriebskraft bereitgestellt wird.

2. Modul nach Anspruch 1,
**dadurch gekennzeichnet, dass** die Tragstruktur (2) wenigstens teilweise ein in Wasser schwimmfähiges Material und/oder wenigstens einen Ballasttank, der mit wenigstens einem Gas und/oder Luft füllbar oder gefüllt ist, aufweist und/oder wenigstens mittelbar mit einer Befestigungseinheit (20) verbunden ist, an der ein Treibanker und/oder eine Grundverankerung befestigbar ist.

3. Modul nach Anspruch 1 oder 2,
**dadurch gekennzeichnet, dass** das Anlagenelement (6) wenigstens einen Wasserstoffspeicher (9) aufweist, der in schwimmendem Zustand der Tragstruktur (2) eine Auftriebskraft bereitstellt sowie ein Teil der Tragstruktur (2) ist und/oder die Tragstruktur (2) bildet.

4. Modul nach einem der vorangehenden,
**dadurch gekennzeichnet, dass** die Wasserbereitstellungsanlage (5) ausgebildet ist, um wenigstens zeitweise einem Gewässer, auf dem die Tragstruktur (2) schwimmt, Wasser zu entnehmen und das entnommene Wasser dem Elektrolyseur (3) als Prozesswasser zur Erzeugung von Wasserstoff zuzuführen und/oder um wenigstens zeitweise aus Umgebungsluft Wasser zu entnehmen und das entnommene Wasser dem Elektrolyseur (3) als Prozesswasser zur Erzeugung von Wasserstoff zuzuführen.

5. Modul nach einem der vorangehenden Ansprüche,
**dadurch gekennzeichnet, dass** die Wasserbereitstellungsanlage (5) wenigstens ein Filterelement (28, 29), eine Einheit zur Wasserentsalzung, eine Sensoreinheit zur Erfassung des Salzgehalts des dem Gewässer entnommenen Wassers und/oder des Prozesswassers, einen Wassertank (10), einen Auslass (12) zur Ableitung von Wasser und/oder Prozesswasser in das Gewässer, ein Heizelement, ein Kondensationselement (16) und/oder einen Wärmeübertrager (30) zur Kondensation von Wasser aus Luft aufweist und/oder über eine Einrichtung (15) zum Auffangen von Regenwasser, Mittel zur Strahlungskühlung und/oder einen Sorptionsentfeuchter, insbesondere einen Sorptionsentfeuchter mit einem während eines Betriebs bewegten Sorptionsmedium, verfügt.

6. Modul nach einem der vorangehenden Ansprüche,
**dadurch gekennzeichnet, dass** die Solarzelle (4) stromleitend mit einem Speicher für elektrische Energie (23) in Form eines Akkumulators und/oder eines Kondensators verbunden ist.

7. Modul nach einem der vorangehenden Ansprüche,
**dadurch gekennzeichnet, dass** die Tragstruktur (2) wenigstens mittelbar mit einer Antriebseinheit (17) und einem davon antreibbaren Antriebsmittel (18) zur Fortbewegung in schwimmendem Zustand verbunden ist.

8. Modul nach Anspruch 8,
**dadurch gekennzeichnet, dass** eine Steuereinheit (19) vorgesehen ist, die eingerichtet ist, um Daten in Bezug auf eine Modulposition, Informationen über einen Sonnenstand und/oder eine Sonnenscheindauer, Wetterparameter, Strömungsparameter, Gezeiteninformationen und/oder Wellenparameter zu verarbeiten und auf der Grundlage der Datenverarbeitung ein Steuersignal zur Ansteuerung der Antriebseinheit (17) und/oder des Antriebsmittels (18) zur gezielten Modulbewegung zu erzeugen.

9. Modul nach einem der vorangehenden Ansprüche,
**dadurch gekennzeichnet, dass** die Tragstruktur (2) mit einer Einheit zur Erzeugung von elektrischer Energie aus Wind-, Wellen- und/oder Strömungsenergie, insbesondere aus Gezeitenströmungsenergie, verbunden ist, die stromleitend mit wenigstens einem Verbraucher elektrischer Energie, einem Akkumulator und/oder dem Elektrolyseur (3) verbunden ist.

10. Modul nach einem der vorangehenden Ansprüche,
**dadurch gekennzeichnet, dass** wenigstens eine Steuerelement (25) vorgesehen ist, um eine Leistung der Wasserbereitstellungsanlage (5) bei der Bereitstellung von Prozesswasser, eine Leistung der Solarzelle (4) bei der Erzeugung elektrischer Energie und/oder eine Leistung des Elektrolyseurs (3) bei der Erzeugung von Wasserstoff in Abhängigkeit wenigstens eines Betriebsparameters, der spezifisch für die Erzeugung und Speicherung der elektrischen Energie und/oder des Wasserstoffs ist, bedarfsgerecht zu variieren.

11. Modul nach einem der vorangehenden Ansprüche,
**dadurch gekennzeichnet, dass** das Schnittstellenelement (7) wenigstens eine Dämpfungs-, eine Feder- und/oder ein Energieumwandlungseinheit aufweist.

12. Anlage (34) mit wenigstens zwei Modulen (1), die gemäß einem der vorangehenden Ansprüche ausgebildet sind, oder mit wenigstens einem Modul (1) gemäß einem der vorangehenden Ansprüche und zumindest einer schwimmfähigen Funktionseinheit (8) zur Erzeugung, Speicherung, Verdichtung, Verarbeitung, Verladung und/oder Weiterleitung von Wasserstoff, wobei die Verbindung zwischen den wenigstens zwei Modulen (1) und/oder zwischen einem Modul (1) und der Funktionseinheit (8) mittels einem zum Transport von elektrischer Energie und/oder Wasserstoff geeigneten Konnektor (27) hergestellt ist.

13. Anlage nach Anspruch 12,
**dadurch gekennzeichnet, dass** eine Verstelleinheit (24) vorgesehen ist, um die Länge der Verbindung und den Abstand zwischen verbundenen Modulen (1) und/oder zwischen einem Modul (1) und einer damit verbundenen Funktionseinheit (8) zu verändern.

14. Anlage nach Anspruch 12 oder 13,
**dadurch gekennzeichnet, dass** wenigstens eines der Module (1) und/oder zumindest eine der Funktionseinheiten eine Gasverdichtereinheit (32), eine Brennstoffzelle (31) zur Erzeugung elektrischer Energie aus Wasserstoff, eine Anlegeeinrichtung (26) mit Befestigungsmitteln zur Befestigung von Wasserfahrzeugen, eine Übergabestelle zur Anbindung einer Schlauch- und/oder Rohrleitung, einen Druckgasspeicher für gasförmigen Wasserstoff, eine Gaszerlegungsanlage, eine Gasverflüssigungsanlage, einen Kryotank, eine Anlage zur Erzeugung von Ammoniak aus Wasserstoff und/oder einen Speicher für Ammoniak aufweist.

15. Anlage nach einem der Ansprüche 12 bis 14,
**dadurch gekennzeichnet, dass** eine Steuereinheit (19, 25) vorgesehen ist, durch die auf der Grundlage von Kennwerten, die auf der Grundlage von Informationen über eine Position des wenigstens einen Moduls (1) und/oder der wenigstens einen Funktionseinheit (8), über einen Sonnenstand und/oder eine Sonnenscheindauer, über Wetterparameter, über Strömungsparameter, über Gezeiten, über Wellenparameter, über Betriebsparameter, die spezifisch für die Erzeugung und Speicherung der elektrischen Energie und/oder des Wasserstoffs sind, und/oder über Abnahmekapazitäten bei der Verladung des Wasserstoffs sind, ein Steuersignal zur Initiierung einer Bewegung, einer Trennung und/oder einer Verbindung von Modulen (1) und/oder Funktionseinheiten (8) generierbar ist.
